# EUROPÄISCHE PATENTSCHRIFT

(11) **EP 0 519 160 B1**
(45) Veröffentlichungstag und Bekanntmachung des Hinweises auf die Patenterteilung: **31.08.1994**
(21) Anmeldenummer: 92103130.8
(22) Anmeldetag: 25.02.1992
(51) Int. Cl.: B65B 7/14

(54) **Zange zum Verschliessen von Tuben**
Pliers for closing tubes
Pince à fermer les tubes

(30) Priorität: 19.06.1991 DE 4120225
(43) Veröffentlichungstag der Anmeldung: 23.12.1992
(73) Patentinhaber: Wolfschlag, Eberhard, D-36132 Eiterfeld (DE)
(72) Erfinder: Wolfschlag, Stefan, W-6419 Eiterfeld (DE)
(74) Vertreter: Schlagwein, Udo, Dipl.-Ing.

(56) Entgegenhaltungen:
- DE-C- 142 690
- FR-A- 428 333
- FR-A- 509 806

## Beschreibung

Die Erfindung betrifft eine Zange zum Verschließen von Tuben mit zwei durch eine Zangenachse miteinander verbundenen zweiarmigen Hebeln, deren kürzere Hebelarme ein Zangenmaul bilden und die zum Umbördeln des zusammengedrückten Endes der gefüllten Tube und zum Flachpressen des umgebördelten Tubenendes ausgebildet ist.

Das Abfüllen von fließfähigen, dispersen Substanzen, insbesondere Salben, in Tuben über den Tubenauslaß und das anschließend erforderliche Verschließen des Tubenendes erfolgt üblicherweise mit einfachem Handwerkszeug von Hand, wenn nur eine kleinere Anzahl von Tuben abzufüllen ist. Das ist beispielsweise in Apotheken der Fall.

Schon seit Anfang des Jahrhunderts sind zangenartige Vorrichtungen zum Verschließen von Tubenenden bekannt (FR-A-509 806), von denen im Laufe der Jahre zahlreiche Variationen in der Praxis Anwendung gefunden haben. So ist z.B. eine Zange der eingangs genannten Art bekanntgeworden, welche ein relativ breites, flächig ausgebildetes Zangenmaul aufweist. Die Zange läßt sich so weit öffnen, daß man mit dem Zangenmaul zunächst das Tubenende flachdrücken kann. Anschließend ergreift man mit dem Rand des Zangenmauls das äußere Ende des flachgedrückten Tubenendes und bördelt dieses mehrfach um. Danach schiebt man die Umbördelung erneut in das Zangenmaul und preßt diese fest zusammen, so daß das Tubenende dicht verschlossen ist. Allen diesen Zangen ist gemeinsam, daß zum Zusammendrücken des offenen Tubenendes, zum Umbördeln des zusammengedrückten Tubenendes und zum Flachpressen der Umbördelung jeweils das gleiche Zangenmaul benutzt wird.

Das Verschließen von Tubenenden mit der bekannten Zange erfordert beträchtliches Geschick und führt zwangsläufig zu Abweichungen zwischen den verschlossenen Enden der verschiedenen Tuben. Oftmals verläuft die zusammengepreßte Umbördelung auch etwas schräg zur Tube, was unschön aussieht und sofort ins Auge fällt. Ein weiterer Nachteil der bekannten Zange liegt darin, daß sich mit ihr keine ausreichend hohe Pressung der Umbördelung erreichen läßt, so daß die Dichtheit der Tuben nicht gewährleistet ist. Höhere Preßkräfte ließen sich auch durch eine Veränderung der Hebelverhältnisse der Zange nicht erzielen, weil das Zangenmaul im geöffneten Zustand über das noch nicht zusammengedrückte Tubenende greifen können muß und in dieser geöffneten Stellung die Griffe der Zange nur so weit voneinander entfernt sein dürfen, daß man sie noch mit einer Hand umfassen kann.

Die FR-A-428333 zeigt in Figur 4 auch schon eine Zange zum Verschließen von Tuben mit zwei durch eine Zangenachse miteinander verbundenen zweiarmigen Hebeln, deren kürzere Hebelarme ein Zangenmaul bilden und die zum Aufpressen einer Lasche auf ein Tubenende ausgebildet ist.

Der Erfindung liegt die Aufgabe zugrunde, eine Zange der eingangs genannten Art so zu gestalten, daß mit ihr offene Tubenenden zusammengedrückt und umgebördelte Tubenenden mit hoher Kraft zusammengepreßt werden können.

Diese Aufgabe wird erfindungsgemäß dadurch gelöst, daß die freien Enden der längeren Hebelarme jeweils einen Andrückkörper zum Zusammendrücken des offenen Tubenendes aufweisen.

Eine solche Zange hat zwischen beiden Enden ihrer Hebelarme jeweils ein Zangenmaul. Zwischen den Enden ihrer kürzeren Hebelarme befindet sich das Zangenmaul zum Zusammendrücken der Umbördelung. Deshalb läßt sich dort durch Drücken auf die längeren Hebelarmen eine hohe Preßkraft erzielen. Zwischen den Enden ihrer längeren Hebelarme befindet sich das Zangenmaul zum Zusammendrücken des offenen Tubenendes. Das hat zur Folge, daß sich dieses Zangenmaul ausreichend weit öffnen läßt, um über das offene Tubenende greifen zu können. Bei der erfindungsgemäßen Zange werden die beiden Funktionen von zwei verschiedenen Zangenseiten erfüllt. Deshalb kann man die Hebelverhältnisse so wählen, daß beide Funktionen optimal erfüllt werden.

Eine besonders vorteilhafte Weiterbildung der Erfindung besteht darin, daß das Zangenmaul eine Aufnahme zum Einschieben einer Wickelwalze aufweist, welche einen in Längsrichtung verlaufenden, zur Aufnahme des zusammengedrückten Tubenendes bemessenen Längsschlitz hat.

Durch diese Ausgestaltung wird die Zange zu einer Wickelvorrichtung, mit der das zusammengedrückte Tubenende sehr exakt und ohne handwerkliches Geschick und stets im gleichen Maße umgewickelt werden kann, so daß es anschließend nur flachgepreßt werden muß, was ebenfalls in der Zange erfolgen kann.

Von Vorteil ist es, wenn die Wickelwalze als Hohlzylinder ausgebildet ist und ihr Längsschlitz lediglich bis in das Innere der Wickelwalze hineinführt. Durch diese Ausbildung läßt sich erreichen, daß das Tubenende stets so weit in die Wickelwalze eingeschoben wird, bis es auf der dem Längsschlitz gegenüberliegenden Seite gegen die Innenwandung der Wickelwalze anliegt. Deshalb erfolgt das Umbördeln des Tubenendes stets an derselben Stelle, so daß die Tube stets dort verschlossen und zusammengepreßt werden kann, wo sich ihre sie abdichtende Klebstoffschicht befindet.

Die erfindungsgemäße Zange eignet sich auch für relativ durchmessergroße Tuben, wenn jeder zweiarmige Hebel aus zwei mit Abstand parallel zueinander auf der Zangenachse angeordneten Seitenteilen besteht, welche an ihren freien Enden des längeren Hebelarmes jeweils durch den Andrückkörper und am freien Ende des kürzeren Hebelarmes durch jeweils einen Preßbacken miteinander verbunden sind.

Die Handhabung der Zange ist besonders einfach, wenn die Andrückkörper als mit einem elastischen Überzug versehene Walzen ausgebildet sind, welche unverdrehbar zwischen den Enden der Seitenteile angeordnet sind und geringfügig über die freien Enden der Seitenteile hinausragen. Solche Andrückkörper haben eine Mehrfachfunktion. Neben ihrer Aufgabe, das offene Tubenende zusammenzudrücken, dienen sie als Griffe beim Flachpressen des umgewickelten Tubenendes. Weiterhin ermöglichen sie ein Aufstellen der Zange auf einer Unterlage in einer solchen Position, in der ihr zum Flachpressen des umgewickelten Tubenendes dienendes Zangenmaul nach oben weist.

Die Aufnahme für die Wickelwalze ist besonders einfach gestaltet, wenn sie durch zwei miteinander fluchtende Bohrungen in den Seitenteilen eines Hebels der Zange gebildet ist.

Besonders vorteilhaft ist es, wenn die Zangenachse unverdrehbar in zwei Seitenteilen eines der Hebel gehalten ist und in ihrer Mantelfläche eine bei geöffnetem Zangenmaul zur Maulöffnung weisende Ausnehmung vorgesehen ist und wenn die die Aufnahme für die Wickelwalze bildenden Bohrungen in den Seitenteilen im Bereich dieser Ausnehmung vorgesehen sind, so daß die eingesetzte Wickelwalze sich innerhalb der Ausnehmung befindet.

Durch diese Gestaltung bildet die Ausnehmung beim Wickeln des Tubenendes eine Außenform. Das ermöglicht ein einfaches Aufwickeln, ohne daß die Gefahr eines Herausrutschens der Tube aus der Wickelwalze besteht.

Die Erfindung läßt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig.1: eine perspektivische Ansicht der Zange mit einer in ihr eingeschobenen Tube,
- Fig.2: einen Blick auf ein Seitenteil der Zange,
- Fig.3: einen Blick auf das gegenüberliegende Seitenteil der Zange,
- Fig.4: eine Draufsicht auf eine Zangenachse,
- Fig.5: eine Draufsicht auf eine Wickelwalze der Zange,
- Fig.6: einen Bereich des Zangenmaules mit eingesetzter Wickelwalze und einem darin eingeschobenen Tubenende zu Beginn des Wickelns des Tubenendes,
- Fig.7: den Bereich nach Figur 6 mit einem fertig gewickelten Tubenende,
- Fig.8: das Zangenmaul unmittelbar vor dem Zusammenpressen eines gewickelten Tubenendes.

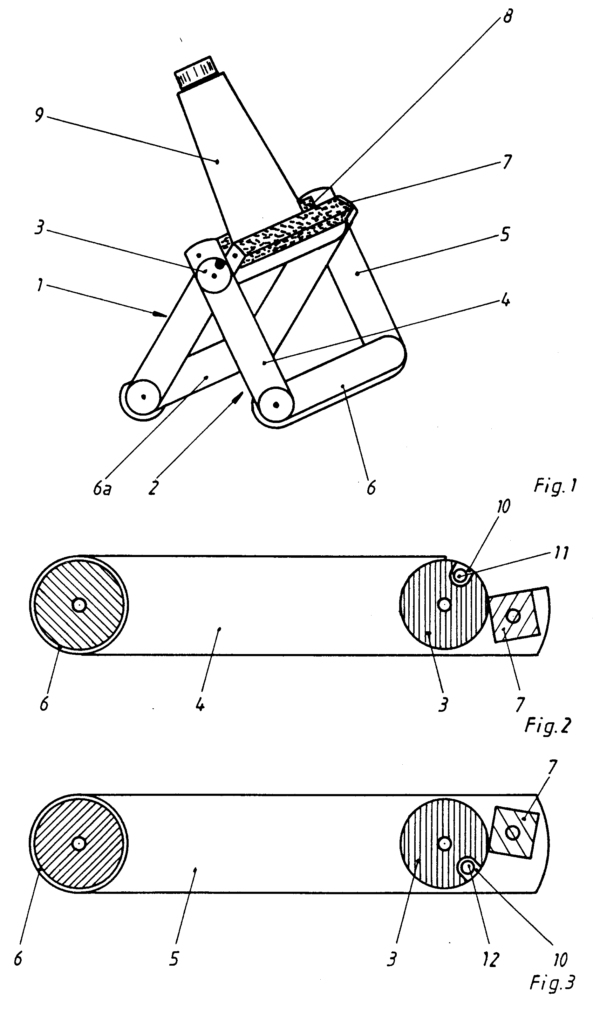

Die Figur 1 zeigt eine Zange, welche aus zwei zweiarmigen Hebeln 1, 2 gebildet ist, die durch eine Zangenachse 3 schwenkbar miteinander verbunden sind. Jeder Hebel 1, 2 besteht aus zwei mit Abstand zueinander parallellaufenden Seitenteilen 4, 5. Diese Seitenteile 4, 5 sind jeweils am unteren Ende, welches den längeren Hebelarm bildet, durch einen zylindrischen Andrückkörper 6, 6a und am entgegengesetzten Ende durch einen Preßbacken 7, 8 miteinander verbunden. In der Darstellung gemäß Figur 1 befindet sich zwischen den Preßbacken 7, 8 das Ende einer zu verschließenden Tube 9.

Die Figuren 2 und 3 lassen erkennen, daß die Andrückkörper 6 jeweils etwas über die Kontur das jeweiligen Seitenteiles 4, 5 hinausragen. Sie sind mit einem elastischen, rutschfesten Werkstoff versehen und bilden auf diese Weise Standflächen, wenn die Zange wie in Figur 1 gezeigt auf eine Unterlage aufgestellt wird. Die Figuren 3 und 4 zeigen weiterhin im Schnitt die Preßbacken 7 und die Zangenachse 3. Zu erkennen ist, daß die Zangenachse 3 über ihre gesamte Länge in ihrer Mantelfläche eine Ausnehmung 10 aufweist. Im Bereich dieser Ausnehmung 10 ist in den Seitenteilen 4, 5 jeweils eine Bohrung 11, 12 vorgesehen, die eine Aufnahme für eine in den Figuren 5, 6 und 7 gezeigte Wickelwalze 13 bilden.

Die Figur 4 läßt die Zangenachse 3 mit der Ausnehmung 10 in Draufsicht erkennen.

Die in Figur 5 gezeigte Aufwickelwalze 13 hat einen zylindrischen Hohlkörper mit einem in Längsrichtung verlaufenden Längsschlitz 14. Quer zum Hohlkörper ist ein Drehstift 15 angeordnet, mit dem man die Aufwickelwalze 13 drehen kann, wenn sie in die Bohrungen 11, 12 eingeschoben ist.

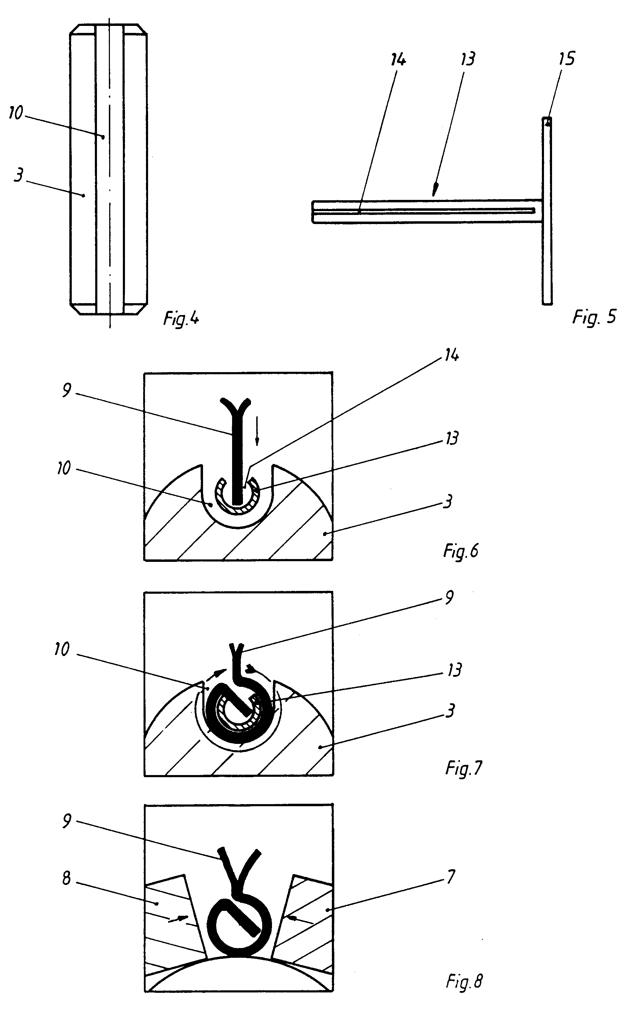

Wenn eine gefüllte Tube 9 verschlossen werden soll, dann schiebt man das Tubenende bei geöffneter Zange zwischen die Andrückkörper 6, 6a und drückt dann die Zange zusammen, so daß die Tubenenden flach zusammengepreßt werden. Anschließend setzt man in die vollständig geöffnete Zange die Wickelwalze 13 ein und schiebt das flachgedrückte Ende der Tube 9 in den Längsschlitz 14 der Wickelwalze 13, bis die Tube 9 gegen die dem Längsschlitz 14 gegenüberliegende Seite in der Wickelwalze 13 anliegt, was in Figur 6 gezeigt ist.

Danach beginnt man, die Wickelwalze 13 zu drehen, wodurch sich das flache Tubenende innerhalb der Ausnehmung 10 der Zangenachse 3 wickelt. Die Figur 7 zeigt die Verhältnisse nach knapp einer Umdrehung der Wickelwalze 13.

In Figur 8 ist gezeigt, wie das auf diese Weise erzeugte umgewickelte Ende nach dem Herausziehen der Wickelwalze 13 zwischen die Preßbacken 7, 8 gebracht wird. Durch Zusammendrücken der Andrückkörper 6, 6a schließt man anschließend die Zange und preßt auf diese Weise die Wicklung flach.

### Auflistung der verwendeten Bezugszeichen

- 1: Hebel
- 2: Hebel
- 3: Zangenachse
- 4: Seitenteil
- 5: Seitenteil
- 6: Andrückkörper
- 7: Preßbacken
- 8: Preßbacken
- 9: Tube
- 10: Ausnehmung
- 11: Bohrung
- 12: Bohrung
- 13: Wickelwalze
- 14: Längsschlitz
- 15: Drehstift

## Patentansprüche

1. Zange zum Verschließen von Tuben mit zwei durch eine Zangenachse (3) miteinander verbundenen zweiarmigen Hebeln (1, 2), deren kürzere Hebelarme ein Zangenmaul bilden und die zum Umbördeln des zusammengedrückten Endes der gefüllten Tube und zum Flachpressen des umgebördelten Tubenendes ausgebildet ist, **dadurch gekennzeichnet**, daß die freien Enden der längeren Hebelarme jeweils einen Andrückkörper (6, 6a) zum Zusammendrücken des offenen Tubenendes aufweisen.

2. Zange nach Anspruch 1, **dadurch gekennzeichnet**, daß das Zangenmaul eine Aufnahme (Bohrungen 11, 12) zum Einschieben einer Wickelwalze (13) aufweist, welche einen in Längsrichtung verlaufenden, zur Aufnahme des zusammengedrückten Tubenendes bemessenen Längsschlitz (14) hat.

3. Zange nach Anspruch 2, **dadurch gekennzeichnet**, daß die Wickelwalze (13) als Hohlzylinder ausgebildet ist und ihr Längsschlitz (14) lediglich bis in das Innere der Wickelwalze (13) hineinführt.

4. Zange nach zumindest einem der vorangehenden Ansprüche, **dadurch gekennzeichnet**, daß jeder zweiarmige Hebel (1, 2) aus zwei mit Abstand parallel zueinander auf der Zangenachse (3) angeordneten Seitenteilen (4, 5) besteht, welche an ihren freien Enden des längeren Hebelarmes jeweils durch den Andrückkörper (6, 6a) und am freien Ende des kürzeren Hebelarmes durch jeweils einen Preßbacken (7, 8) miteinander verbunden sind.

5. Zange nach Anspruch 4, **dadurch gekennzeichnet**, daß die Andrückkörper (6, 6a) als mit einem elastischen Überzug versehene Walzen ausgebildet sind, welche unverdrehbar zwischen den Enden der Seitenteile (4, 5) angeordnet sind und geringfügig über die freien Enden der Seitenteile (4, 5) hinausragen.

6. Zange nach zumindest einem der vorangehenden Ansprüche, **dadurch gekennzeichnet**, daß die Aufnahme für die Wickelwalze (13) durch zwei miteinander fluchtende Bohrungen (11, 12) in den Seitenteilen (4, 5) eines Hebels (2) der Zange gebildet ist.

7. Zange nach Anspruch 6, **dadurch gekennzeichnet**, daß die Zangenachse (3) unverdrehbar in zwei Seitenteilen (4, 5) eines der Hebel (1, 2) gehalten ist und in ihrer Mantelfläche eine bei geöffnetem Zangenmaul zur Maulöffnung weisende Ausnehmung (10) vorgesehen ist und daß die die Aufnahme für die Wickelwalze bildenden Bohrungen (11, 12) in den Seitenteilen (4, 5) im Bereich dieser Ausnehmung (10) vorgesehen sind, so daß die eingesetzte Wickelwalze (13) sich innerhalb der Ausnehmung befindet.

## Claims

1. Gripper for closing tubes with two two-armed levers (1, 2) which are connected to one another by a gripper shaft (3), of which the shorter lever arms form a gripper mouth and which are designed to fold over the clinched end of the filled tube and to flatten the folded over tube end, characterised in that the free ends of the longer lever arms each comprise a pressing member (6, 6a) for clinching the open tube end.

2. Gripper according to claim 1, characterised in that the gripper mouth comprises a receiver (orifices 11, 12) for insertion of a winder (13) having a longitudinally extending slot (14) dimensioned to receive the clinched tube end.

3. Gripper according to claim 2, characterised in that the winder (13) is designed as a hollow cylinder and its longitudinal slot (14) merely leads into the interior of the winder (13).

4. Gripper according to at least one of the preceding claims, characterised in that each two-armed lever (1, 2) consists of two lateral parts (4, 5) which are arranged in parallel with spacing on the gripper shaft (3) and are connected to one another at their free ends of the longer lever arm by the pressing member (6, 6a) in each case and at the free end of the shorter lever arm by a pressing jaw (7, 8) in each case.

5. Gripper according to claim 4, characterised in that the pressing members (6, 6a) are designed as rollers which are provided with a resilient covering, are arranged non-rotatably between the ends of the lateral parts (4, 5) and project slightly beyond the free ends of the lateral parts (4 5).

6. Gripper according to at least one of the preceding claims, characterised in that the receiver for the winder (13) is formed by two mutually aligned orifices (11, 12) in the lateral parts (4, 5) of one lever (2) of the gripper.

7. Gripper according to claim 6, characterised in that the gripper shaft (3) is held non-rotatably in two lateral parts (4, 5) of one of the levers (1, 2) and a recess (10) directed toward the mouth orifice when the gripper mouth is open is provided in its surface and in that the orifices (11, 12) forming the receiver for the winder are provided in the lateral parts (4, 5) in the region of this recess so the inserted winder (13) is located within the recess.

## Revendications

1. Pince pour obturer des tubes comportant des leviers à deux bras reliés l'un à l'autre par un axe de pince (3), dont les bras de leviers les plus courts forment les mors de la pince, conformés pour rabattre les extrémités des tubes remplis, pressées l'une contre l'autre, et pour aplatir les extrémités rabattues des tubes, caractérisée en ce que les extrémités libres des bras de leviers les plus longs présentent chacune un corps de serrage (6, 6a) pour presser l'une contre l'autre les extrémités des tubes ouverts.

2. Pince selon la revendication 1, caractérisée en ce que les mors de la pince présentent un logement (perçages 11, 12) pour introduire un rouleau d'enroulement (13), lequel présente une fente oblongue (14) s'étendant longitudinalement et dimensionnée pour loger les extrémités des tubes pressées l'une contre l'autre.

3. Pince selon la revendication 2, caractérisée en ce que le rouleau d'enroulement (13) est un cylindre creux, et en ce que sa fente (14) se prolonge à l'intérieur du cylindre d'enroulement (13).

4. Pince selon l'une au moins des revendications précédentes, caractérisée en ce que chaque levier à deux bras (1, 2) est constitué de deux parties latérales (4, 5) séparées et disposées parallèlement entre elles, chaque extrémité libre des bras de leviers les plus longs étant reliées par un corps de serrage (6, 6a) et chaque extrémité libre des bras de leviers les plus courts étant reliées par un corps de pressage (7, 8).

5. Pince selon la revendication 4, caractérisée en ce que les corps de pressage (6, 6a) sont formés de rouleaux pourvus d'un revêtement élastique, et sont montés sans pouvoir tourner entre les extrémités des parties latérales (4, 5) et dépassent faiblement des extrémités libres des parties latérales (4, 5).

6. Pince selon l'une au moins des revendications précédentes, caractérisée en ce que le logement pour le cylindre d'enroulement (13) est formé de deux perçages (11, 12) alignés, formés dans les parties latérales (4, 5) d'un levier.

7. Pince selon la revendication 6, caractérisée en ce que l'axe de pince (3) est maintenu bloqué en rotation dans deux parties latérales (4, 5) de l'un des deux leviers (1, 2), et pourvu d'un creux (10) sur la surface externe, du côté de l'ouverture des mors de la pince, et en ce que les logements du cylindre d'enroulement formés de perçages (11, 12) sont prévus dans la zone du creux (10), de telle sorte que le cylindre d'enroulement se trouve à l'intérieur dudit creux.
